# EUROPÄISCHE PATENTSCHRIFT

(11) **EP 1 108 341 B1**
(45) Veröffentlichungstag und Bekanntmachung des Hinweises auf die Patenterteilung: **09.05.2007**
(21) Anmeldenummer: 99953627.9
(22) Anmeldetag: 27.08.1999
(51) Int. Cl.: H04Q 7/38

(54) **VERFAHREN UND MOBIL-KOMMUNIKATIONSSYSTEM ZUR STEUERUNG EINES VERBINDUNGSAUFBAUS**
METHOD AND MOBILE COMMUNICATION SYSTEM FOR CONTROLLING A CONNECTION SETUP
PROCEDE ET SYSTEME DE COMMUNICATION MOBILE POUR LA COMMANDE D'ETABLISSEMENT D'UNE LIAISON

(30) Priorität: 27.08.1998 DE 19839016
(43) Veröffentlichungstag der Anmeldung: 20.06.2001
(73) Patentinhaber: SIEMENS AKTIENGESELLSCHAFT, 80333 München (DE)
(72) Erfinder: DZUBAN, Stanislav, A-1020 Wien (AT); FÖLL, Uwe, D-14612 Falkensee (DE); ERFURT, Frank, D-14532 Kleinmachnow (DE); LEITGEB, Manfred, A-2440 Gramatneusiedl (AT); NIEPEL, Alexander, D-80337 München (DE); REIMER, Uve, D-12683 Berlin (DE); SCHENDEL, Jens, D-13349 Berlin (DE)
(86) Internationale Anmeldenummer: PCT/DE1999/002696
(87) Internationale Veröffentlichungsnummer: WO 2000/013445

(56) Entgegenhaltungen:
- WO-A-98/59503
- WO-A-99/23836
- US-A- 5 504 804
- SMITH D G: "AN INTRODUCTION TO GSM ENHANCEMENTS FOR OPERATOR SPECIFIC SERVICES (CAMEL)" IEE COLLOQUIUM ON MOBILE COMMUNICATIONS TOWARDS THE NEXT MILLENIUM AND BEYOND, 17. Mai 1996 (1996-05-17), XP000605991

## Beschreibung

Die Erfindung betrifft ein Verfahren und ein Mobil-Kommunikationssystem zur Steuerung eines Verbindungsaufbaus.

Mobilen Teilnehmern ist es möglich, sich mit ihren Kommunikationsendgeräten auch über Netzgrenzen ihres Heimat-Mobilfunknetzes hinweg frei zu bewegen (roaming). Aus seinem Heimat-Mobilfunknetz vertraute Rufnummern - wie z.B. Diensterufnummern, Hotline-Nummer, Mailbox-Nummer usw. - kann der Teilnehmer für den Fall des Roamings in ein fremdes Besucher-Mobilfunknetz aber nicht ohne weiteres nutzen, da er dem dort gültigen Numerierungsplan unterliegt. Selbst wenn eine Erreichbarkeit der Rufnummer im fremden Netz grundsätzlich möglich ist, wählt der mobile Teilnehmer üblicherweise die ihm aus seinem Netz bekannte Rufnummer, um die Verbindung zu initiieren. Diese Vorgehensweise schlägt aber fehl, sodass für den mobilen Teilnehmer aufwendige Zusatzmaßnahmen zu ergreifen sind.

Mobil-Kommunikationssysteme nutzen bekanntlich zur Registrierung der mobilen Teilnehmer in ihrem Heimat-Mobilfunknetz eine oder mehrere Teilnehmerdatenbasen (Heimatregister), in denen jeweils die Teilnehmerdaten teilnehmerindividuell gespeichert werden. Da der Teilnehmer sich im System zwischen mehreren Funkversorgungsgebieten bewegt, wird er folglich abhängig von seinem aktuellen Aufenthaltsort mit den teilnehmerindividuellen Daten in einem oder mehreren weiteren Teilnehmerdatenbasen (Besucherregister) registriert. Zu diesem Zweck erfolgt bekanntlich eine Aktualisierungsprozedur (Location Update). Mit diesen Teilnehmerdatenbasen sind über das System verteilte Vermittlungseinrichtungen gekoppelt, die zur Steuerung des Verbindungsaufbaus und zum Routen der Verbindungen von/zu den Kommunikationsendgeräten verantwortlich sind, die sich wegen ihres aktuellen Aufenthaltsorts in deren Zuständigkeitsbereich jeweils befinden.

Aus SIMTH, D. G. "An introduction to GSM enhancements for operator specific services (Camel), IEE colloquium on mobile communications towards the next millenium and beyond", 17.Mai.1996, XP000605991 ist bekannt, daß in einem Camel-Netzwerk teilnehmerindividuelle Daten in einem Heimatmobilfunknetz HPLNM eines Teilnehmers gespeichert werden und bei Bewegung des Teilnehmers abhängig von seinem aktuellen Aufenthaltsort gemäß einer Aktualisierungsprozedur in eine weitere Teilnehmer- Datenbasis eingetragen werden.

Es ist Aufgabe der vorliegenden Erfindung, ein Verfahren und ein Mobil-Kommunikationssystem anzugeben, durch das eine Steuerung des Verbindungsaufbaus auch für die Nutzung von vertrauten Rufnummern durch den sich bewegenden Teilnehmer ausserhalb seines Heimat-Mobilfunknetzes möglich ist.

Diese Aufgabe wird gemäß der Erfindung durch die Merkmale des Patentanspruchs 1 hinsichtlich des Verfahrens und durch die Merkmale des Patentanspruchs 9 hinsichtlich des Mobil-Kommunikationssystems gelöst. Weiterbildungen der Erfindung sind in den Unteransprüchen angegeben.

Ausgehend davon, daß teilnehmerindividuelle Daten jedes in seinem Heimat-Mobilfunknetz registrierten mobilen Teilnehmers in zumindest einer Teilnehmerdatenbasis gespeichert und bei Bewegung des Teilnehmers gemäß einer Aktualisierungsprozedur in eine weitere Teilnehmerdatenbasis eingetragen werden, sieht der Gegenstand der Erfindung vor, daß in der Teilnehmerdatenbasis des Heimat-Mobilfunknetzes zusätzlich ein Rufnummernprofil mit für alle registrierten mobilen Teilnehmer allgemeingültigen Rufnummern gespeichert und bei Bewegung des jeweiligen Teilnehmers in das Besucher-Mobilfunknetz in der Aktualisierungsprozedur zur Speicherung in der weiteren Teilnehmerdatenbasis mitübertragen wird. Des weiteren werden im Besucher-Mobilfunknetz von der Vermittlungseinrichtung für eine vom Kommunikationsendgerät abgehende Verbindung, die mit einer vom mobilen Teilnehmer gewählten Zielrufnummer initiiert wird, die Rufnummern des Rufnummernprofils mit der Zielrufnummer verglichen und bei Übereinstimmung eine Verbindung zu einer Dienstesteuereinrichtung aufgebaut, die die mitübertragene Zielrufnummer in ein neue Zielrufnummer umsetzt und an die Vermittlungseinrichtung für den weiteren Verbindungsaufbau rücksendet.

Durch das erfindungsgemäße Rufnummernprofil mit allgemeingültigen Rufnummern für alle im Heimatnetz registrierten mobilen Teilnehmer wird erreicht, daß die dem mobilen Teilnehmer vertrauten Rufnummern nicht nur in seinem Heimatnetz, sondern auch in jedem anderen Netz, in dem er sich gerade befindet, ohne aufwendige Zusatzmaßnahmen seitens des Teilnehmers abgerufen werden können. Er verhält sich bezüglich der Wahl der gewünschten Rufnummern, als ob er sich im Heimatnetz befände. Die Speicherung des Rufnummernprofils gilt für alle Teilnehmer, sodass es nicht teilnehmerindividuell festgelegt, gespeichert und bei einer Aktualisierung geladen zu werden braucht. Das Rufnummernprofil wird bei jedem Update des Aufenthaltsorts auf Grund eines Roamings in ein fremdes Netz automatisch zusätzlich zu den teilnehmerindividuellen Daten mitgeliefert.

Gemäß einer vorteilhaften Weiterbildung der Erfindung wird die Zielrufnummer mit einem netzinternen Rufnummernformat von der Dienstesteuereinrichtung in die neue Zielrufnummer mit einem internationalen Rufnummernformat umgesetzt. Damit ist eine erfolgreiche international gültige Kennzeichnung der Rufnummer durch die Dienstesteuereinrichtung im Verbindungsaufbau erzielt, ohne dass der Teilnehmer dies merkt oder gar hierfür Maßnahmen hätte durchführen müssen. Aus seiner lediglich netzintern gültigen Rufnummer wird automatisch eine internationale Rufnummer.

Auch ist es von Vorteil, wenn die allgemeingültigen Rufnummern im Rufnummernprofil wahlweise entweder mit vollständiger Anzahl von Rufnummernziffern oder mit verkürzter Anzahl von Rufnummernziffern gespeichert und jeweils mit der entsprechenden Anzahl von Rufnummernziffern der Zielrufnummer verglichen werden. Die Speicherung der verkürzten Rufnummern bietet dabei den Vorteil einer Reduzierung des Speicherplatzbedarfs in den jeweiligen Teilnehmerdatenbasen.

Gemäß einer anderen Weiterbildung der Erfindung werden zusätzlich zu den allgemeingültigen Rufnummern im Rufnummernprofil eine Dienstekennung und/oder eine Kennung der Dienstesteuereinrichtung gespeichert und mitübertragen. Damit können zusätzliche Informationen mitgeliefert werden, die zu einem schnelleren und/oder einfacheren Verbindungsaufbau durch die Vermittlungseinrichtung führen.

Das Mobil-Kommunikationssystem gemäß der Erfindung weist Speichermittel in der Teilnehmerdatenbasis des Heimat-Mobilfunknetzes für eine zusätzliche Speicherung eines Rufnummernprofils mit für alle registrierten mobilen Teilnehmer allgemeingültigen Rufnummern und Steuermittel in der Teilnehmerdatenbasis zur Übertragung des Rufnummernprofils in der Aktualisierungsprozedur bei Bewegung des jeweiligen Teilnehmers in das Besucher-Mobilfunknetz sowie Speichermittel in der weiteren Teilnehmerdatenbasis zur Speicherung des mitübertragenen Rufnummernprofils auf. Des weiteren sind Steuermittel in der Vermittlungseinrichtung des Besucher-Mobilfunknetzes zum Vergleich der Rufnummern des Rufnummernprofils mit einer vom mobilen Teilnehmer gewählten Zielrufnummer für eine vom Kommunikationsendgerät abgehende Verbindung, die mit der Zielrufnummer initiiert wird, und zum Aufbau einer Verbindung zu einer Dienstesteuereinrichtung bei Übereinstimmung vorgesehen. Darüber hinaus weist die Dienstesteuereinrichtung Steuermittel zum Umsetzen der mitübertragenen Zielrufnummer in eine neue Zielrufnummer und zum Rücksenden der neuen Zielrufnummer an die Vermittlungseinrichtung für den weiteren Verbindungsaufbau auf.

Die Erfindung wird anhand eines in einer Zeichnung dargestellten Ausführungsbeispiels näher erläutert, die das Blockschaltbild eines Mobil-Kommunikationssystems zur Steuerung des Verbindungsaufbaus zeigt. Dabei ist das Beispiel an ein System nach dem GSM-Standard angelehnt, die Erfindung jedoch nicht auf ein solches beschränkt. Das Mobil-Kommunikationssystem umfasst aus Sicht eines mobilen Teilnehmers, der ein Kommunikationsendgerät MS zum Initiieren von abgehenden Verbindungen (Mobile Originated Calls) und Empfangen von ankommenden Verbindungen (Mobile Terminated Calls) benutzt, ein Heimat-Mobilfunknetz HPLMN und ein Besucher-Mobilfunknetz VPLMN. Dabei ist er mit seinen teilnehmerindividuellen Daten in einem Heimatregister HLR des Heimat-Mobilfunknetzes HPLMN permanent für die Dauer seiner Registrierung gespeichert. Wegen seiner Mobilität ist er darüber hinaus für die Dauer eines vorübergehenden Aufenthalts in einem anderen Funkversorgungsbereichs auch in einem Besucherregister VLR des Besucher-Mobilfunknetzes VPLMN mit seinen teilnehmerindividuellen Daten gespeichert. Der Funkversorgungsbereich wird vermittlungstechnisch von einer Vermittlungseinrichtung MSC betreut, die den Verbindungsaufbau für die Verbindungen steuert, die von Teilnehmern bzw. Endgeräten mit zugehörigen Daten im Besucherregister VLR entgegengenommen und initiiert werden können. Es verfügen die Vermittlungseinrichtung MSC und das Heimatregister HLR über eine Steuereinrichtung CM bzw. CON sowie das Heimatregister HLR und das Besucherregister VLR jeweils über eine Speichereinrichtung MM. Von der Vermittlungseinrichtung MSC kann eine Verbindung zu einer Diensteeinrichtung SCP eines Intelligenten Netzes (IN, Intelligent Network) aufgebaut werden, wenn ein IN-Trigger bei der Verbindungsbehandlung vorliegt. Dabei weist die Diensteeinrichtung SCP eine Dienstelogik SL zur Steuerung der IN-Dienste auf.

Zur Steuerung des Verbindungsaufbaus gemäß der Erfindung wird in einem Schritt (1) ein Rufnummernprofil R-CSI (Roaming CAMEL Service Information) mit für alle registrierten mobilen Teilnehmer Sub1, Sub2...Subn allgemeingültigen Rufnummern, z.B. No1=1234 und No2=37367, im Heimatregister HLR des Heimat-Mobilfunknetzes HPLMN zusätzlich gespeichert und bei Bewegung des jeweiligen Teilnehmers in das Besucher-Mobilfunknetz VPLMN in der Aktualisierungsprozedur LUP (location Update) zur Speicherung im Besucherregister VLR mitübertragen. Die Speicherung in den beiden Teilnehmerdatenbasen erfolgt jeweils in den Speichereinrichtungen MM, wobei die Steuereinrichtung CON des Heimatregisters HLR das Auslesen der Speichereinrichtung MM und die Übertragung des Rufnummernprofils R-CSI in der Aktualisierungsprozedur LUP veranlasst. Vc=zugsweise sind in der Speichereinrichtung MM des Heimatregisters HLR weitere Informationen gespeichert, so z.B. eine Dienstekennung SK (Service Key) und/oder eine Kennung SCP-A (Service Control Point Address) der Dienstesteuereinrichtung SCP. Auch diese zusätzlichen Informationen, die allgemeingültig für alle im Heimatregister HLR gespeicherten Teilnehmer Sub1, Sub2...Subn definiert und administriert werden, können in der Aktualisierungsprozedur zusätzlich zu den teilnehmerindividuellen Daten mitübertragen werden.

Als allgemeingültige Rufnummern No1, No2 sind im Rufnummernprofil R-CSI beispielsweise Kurzrufnummern, die dem Teilnehmer in seinem Heimat-Mobilfunknetz HPLMN vertraut sind, gespeichert. Durch die Erfindung kann bei Wahl einer dem Teilnehmer bekannten Kurzrufnummer auch im fremden Netz VPLMN ein bestimmter Dienst (Service Number) genutzt oder eine Mailbox abgerufen werden, selbst wenn dort ein anderer Numerierungsplan existiert. Die allgemeingültigen Rufnummern No1, No2 im Rufnummernprofil R-CSI sind in der Speichereinrichtung MM wahlweise mit vollständiger Anzahl von Rufnummernziffern oder mit verkürzter Anzahl von Rufnummernziffern gespeichert.

Gemäß der Erfindung werden im Besucher-Mobilfunknetz VPLMN von der Vermittlungseinrichtung MSC für eine vom Kommunikationsendgerät MS abgehende Verbindung, die vom mobilen Teilnehmer im vorliegenden Beispiel gemäß Schritt (2) mit einer Nachricht SU (setup) und einer gewählten Zielrufnummer CldPA=1234 - beispielsweise einer Kurzrufnummer - initiiert wird, die Rufnummern No1, No2 des Rufnummernprofils R-CSI mit der Zielrufnummer CldPA verglichen. Da im vorliegenden Beispiel für die Rufnummer No1 und die Zielrufnummer CldPA mit jeweils der Ziffernkombination 1234 die Übereinstimmung gegeben ist, wirkt diese Übereinstimmung in der Vermittlungseinrichtung als IN-Triggermechanismus - siehe Schritt (3) -, sodass als Folge das Routing der Verbindung von der Vermittlungseinrichtung MSC zu der Diensteeinrichtung SCP folgt. Das Routing gemäß Schritt (4) enthält eine Anfragenachricht SCP-Q (Query) mit der Zielrufnummer CldPA=1234 - respektive der Kurzrufnummer No1=1234 - an die Dienstesteuereinrichtung SCP, deren Dienstelogik SL die empfangene Zielrufnummer in ein neue Zielrufnummer CldPA*=+49 172 66666 umsetzt - siehe Schritt (5). Danach sendet die Dienstesteuereinrichtung SCP bzw. deren Dienstelogik SL die neue Zielrufnummer C1dPA*=+49 172 66666 an die Vermittlungseinrichtung MSC für den weiteren Verbindungsaufbau zurück - siehe Schritt (6). Im vorliegenden Beispiel wurde die in der Dienstesteuereinrichtung SCP eingetroffene Kurzrufnummer C1dPA=1234, die mit einem netzinternen Rufnummernformat in dieser Ziffernkombination nur im Heimat-Mobilfunknetz HPLMN Gültigkeit hat, in eine lange Rufnummer CldPA^{*}=+4917266666 mit einem internationalen Rufnummernformat einschließlich Landeskennzahl (+49) als auch Netzkennzahl (172), das auch im Besucher-Mobilfunknetz VPLMN Gültigkeit hat, umgesetzt.

Es sei angenommen, dass für den mobilen Teilnehmer in den teilnehmerindividuellen Daten auch Dienstedaten enthalten sind, die die Nutzung eines IN-Dienstes und damit das Routen der Verbindung zu einer Diensteeinrichtung - ggf. einer anderen als der Diensteeinrichtungen SCP - ermöglichen. Für diesen Fall werden diese Dienstedaten vom Heimatregister in das Besucherregister VLR geladen und von der Vermittlungseinrichtung MSC ausgewertet. Wegen des Vorliegens eines IN-Triggers baut die Vermittlungseinrichtung zunächst die Verbindung zu der IN-Diensteeinrichtung auf. Nach diesem Verbindungsaufbau werden die Rufnummern des Rufnummernprofils R-CSI bezüglich einer Übereinstimmung mit der Zielrufnummer CldPA bewertet und ein weiterer Verbindungsaufbau zu der dargestellten Diensteeinrichtung SCP gemäß obiger Vorgehensweise durchgeführt. Durch die Sequenzialisierung der Verbindungsbehandlung ist gewährleistet, dass nacheinander mehrere Kontakte zu Diensteeinrichtungen SCP bzw. Dienstelogiken SL während des Verbindungsaufbaus unterstützt werden. Damit ist in vorteilhafter Weise eine Kombination eines für den mobilen Teilnehmer individuell nutzbaren und eingetragenen IN-Dienstes mit dem IN-Triggermechanismus gemäß den für alle Teilnehmer allgemeingültigen Rufnummern des Rufnummernprofils laut der Erfindung möglich.

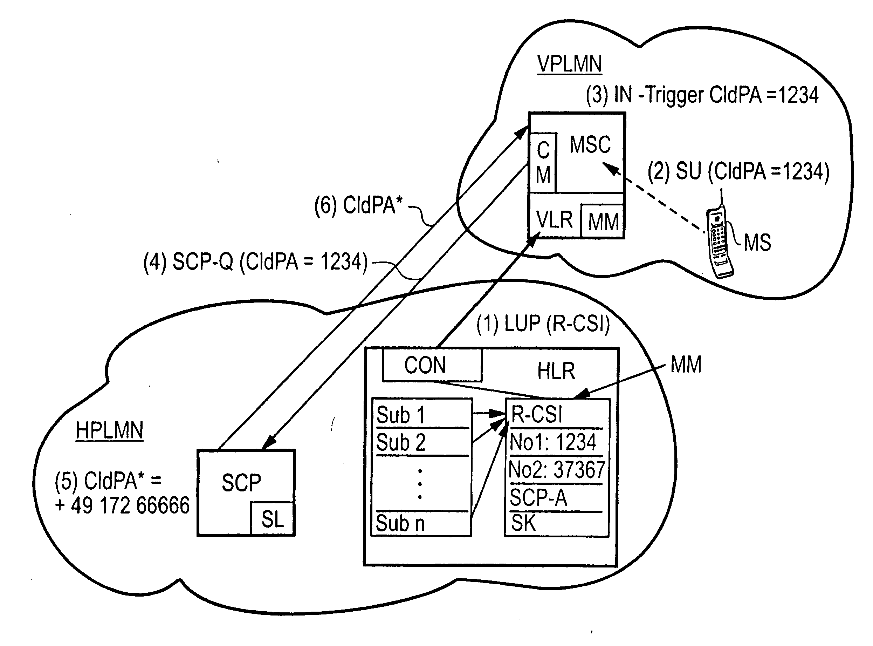

## Patentansprüche

1. Verfahren zur Steuerung eines Verbindungsaufbaus in einem Mobil-Kommunikationssystem, wobei
- teilnehmerindividuelle Daten jedes in seinem Heimat-Mobilfunknetz (HPLMN) registrierten mobilen Teilnehmers in zumindest einer Teilnehmerdatenbasis (HLR) gespeichert und bei Bewegung des Teilnehmers abhängig von seinem aktuellen Aufenthaltsort gemäß einer Aktualisierungsprozedur (LUP) in eine weitere Teilnehmerdatenbasis (VLR) eingetragen werden,
- Verbindungen von/zu einem Kommunikationsendgerät (MS) des mobilen Teilnehmers von einer mit der weiteren Teilnehmerdatenbasis (VLR) gekoppelten Vermittlungseinrichtung (MSC) aufgebaut werden,
**dadurch gekennzeichnet, daß**
- in der Teilnehmerdatenbasis (HLR) des Heimat-Mobilfunknetzes (HPLMN) zusätzlich ein Rufnummernprofil (R-CSI) mit für alle registrierten mobilen Teilnehmer allgemeingültigen Rufnummern (No1, No2) gespeichert und bei Bewegung des jeweiligen Teilnehmers in das Besucher-Mobilfunknetz (VPLMN) in der Aktualisierungsprozedur (LUP) zur Speicherung in der weiteren Teilnehmerdatenbasis (VLR) mitübertragen wird, und
- im Besucher-Mobilfunknetz (VPLMN) von der Vermittlungseinrichtung (MSC) für eine vom Kommunikationsendgerät (MS) abgehende Verbindung, die mit einer vom mobilen Teilnehmer gewählten Zielrufnummer (C1dPA) initiiert wird, die Rufnummern des Rufnummernprofils (R-CSI) mit der Zielrufnummer (CldPA) verglichen werden und bei Übereinstimmung eine Verbindung zu einer Dienstesteuereinrichtung (SCP) aufgebaut wird, die die mitübertragene Zielrufnummer (CldPA) in ein neue Zielrufnummer (CldPA^{*}) umsetzt und an die Vermittlungseinrichtung (MSC) für den weiteren Verbindungsaufbau rücksendet.

2. Verfahren nach Anspruch 1, bei dem
die Zielrufnummer (CldPA) mit einem netzinternen Rufnummernformat von der Dienstesteuereinrichtung (SCP) in die neue Zielrufnummer (C1dPA*) mit einem internationalen Rufnummernformat umgesetzt wird.

3. Verfahren nach Anspruch 1 oder 2, bei dem
zusätzlich zu den allgemeingültigen Rufnummern (No1, No2) im Rufnummernprofil (R-CSI) eine Dienstekennung (SK) und/oder eine Kennung (SCP-A) der Dienstesteuereinrichtung (SCP) gespeichert und mitübertragen werden.

4. Verfahren nach einem der vorhergehenden Ansprüche, bei dem Kurzrufnummern als allgemeingültige Rufnummern (No1, No2) im Rufnummernprofil (R-CSI) gespeichert werden.

5. Verfahren Anspruch 4, bei dem
durch die Wahl einer Kurzrufnummer ein bestimmter Dienst vom mobilen Teilnehmer genutzt wird.

6. Verfahren Anspruch 4 oder 5, bei dem
durch die Wahl einer Kurzrufnummer eine Mailbox vom mobilen Teilnehmer abgerufen wird.

7. Verfahren nach einem der vorhergehenden Ansprüche, bei dem die allgemeingültigen Rufnummern (No1, No2) im Rufnummernprofil (R-CSI) mit vollständiger Anzahl von Rufnummernziffern oder mit verkürzter Anzahl von Rufnummernziffern gespeichert und jeweils mit der entsprechenden Anzahl von Rufnummernziffern der Zielrufnummer (CldPA) verglichen werden.

8. Verfahren nach einem der vorhergehenden Ansprüche, bei dem
- für den mobilen Teilnehmer in den Teilnehmerdatenbasen (HLR, VLR) Dienstedaten als teilnehmerindividuelle Daten gespeichert werden, und
- von der Vermittlungseinrichtung (MSC) zunächst die Dienstedaten ausgewertet werden und ein Verbindungsaufbau zu einer Diensteeinrichtung durchgeführt wird, sowie anschließend die Rufnummern (NO1, No2) des Rufnummernprofils (R-CSI) bezüglich der Zielrufnummer (CldPA) ausgewertet und eine weitere Verbindung zu einer Diensteeinrichtung (SCP) aufgebaut wird.

9. Mobil-Kommunikationssystem zur Steuerung eines Verbindungsaufbaus, mit
- zumindest einer Teilnehmerdatenbasis (HLR), in der teilnehmerindividuelle Daten jedes in seinem Heimat-Mobilfunknetz (HPLMN) registrierten mobilen Teilnehmers gespeichert sind, und einer weiteren Teilnehmerdatenbasis (VLR), in der die teilnehmerindividuellen Daten bei Bewegung des Teilnehmers abhängig von seinem aktuellen Aufenthaltsort gemäß einer Aktualisierungsprozedur (LUP) gespeichert sind,
- einer mit der weiteren Teilnehmerdatenbasis (VLR) gekoppelten Vermittlungseinrichtung (MSC) zum Aufbau von Verbindungen von/zu einem Kommunikationsendgerät (MS) des mobilen Teilnehmers,
**dadurch gekennzeichnet, daß** es folgendes aufweist:
- Speichermittel (MM) in der Teilnehmerdatenbasis (HLR) des Heimat-Mobilfunknetzes (HPLMN) für eine zusätzliche Speicherung eines Rufnummernprofils (R-CSI) mit für alle registrierten mobilen Teilnehmer allgemeingültigen Rufnummern (No1, No2) und Steuermittel (CON) in der Teilnehmerdatenbasis (HLR) zur Übertragung des Rufnummernprofils (R-CSI) in der Aktualisierungsprozedur (LUP) bei Bewegung des jeweiligen Teilnehmers in das Besucher-Mobilfunknetz (VPLMN) sowie Speichermittel (MM) in der weiteren Teilnehmerdatenbasis (VLR) zur Speicherung des mitübertragenen Rufnummernprofils (R-CSI),
- Steuermittel (CM) in der Vermittlungseinrichtung (MSC) des Besucher-Mobilfunknetzes (VPLMN) zum Vergleich der Rufnummern des Rufnummernprofils (R-CSI) mit einer vom mobilen Teilnehmer gewählten Zielrufnummer (CldPA) für eine vom Kommunikationsendgerät (MS) abgehende Verbindung, die mit der Zielrufnummer (CldPA) initiiert wird, und zum Aufbau einer Verbindung zu einer Dienstesteuereinrichtung (SCP) bei Übereinstimmung, und
- - Steuermittel (SL) in der Dienstesteuereinrichtung (SCP) zum Umsetzen der mitübertragenen Zielrufnummer (CldPA) in eine neue Zielrufnummer (CldPA^{*}) und zum Rücksenden der neuen Zielrufnummer (CldPA^{*}) an die Vermittlungseinrichtung (MSC) für den weiteren Verbindungsaufbau.

## Claims

1. Method for controlling the setting-up of a connection in a mobile communication system, wherein
- subscriber-oriented data of each mobile subscriber registered in his home mobile radio network (HPLMN) are stored in at least one subscriber database (HLR) and, when the subscriber moves, are entered in a corresponding subscriber database (VLR) in accordance with an updating procedure (LUP), depending on his current location,
- connections from/to a mobile station (MS) of the mobile subscriber are set up by a mobile switching center (MSC) coupled to the corresponding subscriber database (VLR),
**characterized in that**
- a subscriber number profile (R-CSI) with call numbers (No1, No2) generally valid for all registered mobile subscribers is stored additionally in the subscriber database (HLR) of the home mobile radio network (HPLMN) and, when the respective subscriber moves into the visited mobile radio network (VPLMN), is also transmitted in the updating procedure (LUP) for storage in the corresponding subscriber database (VLR), and
- the mobile switching center (MSC) in the visited mobile radio network (VPLMN) compares the call numbers of the subscriber number profile (R-CSI) with the called party address (CldPA) for a mobile station (MS) originated call which is initiated with a called party address (CldPA) dialed by the mobile subscriber, and, when they match, a connection is set up to a service control point (SCP) which translates the called party address (CldPA) also transmitted into a new called party address (CldPA^{*}) and sends it back to the mobile switching center (MSC) for the further setting-up of a connection.

2. Method according to claim 1, in which the called party address (CldPA) with an internal network call number format is translated into the new called party address (CldPA^{*}) with an international call number format by the service control point (SCP).

3. Method according to claim 1 or 2, in which, in addition to the generally valid call numbers (No1, No2) in the subscriber number profile (R-CSI), a service key (SK) and/or a service control point address (SCP-A) of the service control point (SCP) are stored and also transmitted.

4. Method according to one of the preceding claims, in which abbreviated call numbers are stored as generally valid call numbers (No1, No2) in the subscriber number profile (R-CSI).

5. Method according to claim 4, in which a certain service is used by the mobile subscriber by dialing an abbreviated call number.

6. Method according to claim 4 or 5, in which a mailbox is called up by the mobile subscriber by dialing an abbreviated call number.

7. Method according to one of the preceding claims, in which the generally valid call numbers (No1, No2) in the subscriber number profile (R-CSI) are stored with the complete number of call number digits or with an abbreviated number of call number digits and are in each case compared with the corresponding number of call number digits of the called party address (C1dPA) .

8. Method according to one of the preceding claims, in which
- service data are stored as subscriber-oriented data for the mobile subscriber in the subscriber databases (HLR, VLR), and
- the mobile switching center (MSC) initially evaluates the service data and sets up a call to a service control point and then the call numbers (No1, No2) of the subscriber number profile (R-CSI) are evaluated with respect to the called party address (CldPA) and a further connection is set up to a service control point (SCP).

9. A mobile communication system for controlling the setting-up of a connection, comprising
- at least one subscriber database (HLR) in which subscriber-oriented data of each mobile subscriber registered in his home mobile radio network (HPLMN) are stored, and a corresponding subscriber database (VLR) in which the subscriber-oriented data are stored in accordance with an updating procedure (LUP) in dependence on the subscriber's current location when he moves,
- a mobile switching center (MSC) coupled to the corresponding subscriber database (VLR) for setting up connections from/to a mobile station (MS) of the mobile subscriber, **characterized in that** it exhibits the following:
- memory means (MM) in the subscriber database (HLR) of the home mobile radio network (HPLMN) for additional storage of a subscriber number profile (R-CSI) with call numbers (No1, No2) which are generally valid for all registered mobile subscribers, and control means (CON) in the subscriber database (HLR) for transmitting the subscriber number profile (R-CSI) in the updating procedure (LUP) when the respective subscriber moves into the visited mobile radio network (VPLMN) and memory means (MM) in the corresponding subscriber database (VLR) for storing the subscriber number profile (R-CSI) also transmitted,
- control means (CM) in the mobile switching center (MSC) of the visited mobile radio network (VPLMN) for comparing the call numbers of the subscriber number profile (R-CSI) with a called party address (CldPA) dialed by the mobile subscriber for a mobile (MS) originated call which is initiated with the called party address (C1dPA), and for setting up a connection to a service control point (SCP) when they match, and
- control means (SL) in the service control point (SCP) for translating the called party address (CldPA) also transmitted into a new called party address (CldPA^{*}) and for sending the new called party address (CldPA*) back to the mobile switching center (MSC) for continuing the connection set-up.

## Revendications

1. Procédé de commande de l'établissement d'une liaison dans un système de télécommunication mobile, dans lequel
- des données individuelles de chaque abonné mobile enregistrées dans son réseau de télécommunication mobile d'inscription (HPLMN) sont stockées dans au moins une base de données d'abonné (HLR) et, lorsque l'abonné se déplace, sont transmises, en fonction de l'emplacement où il se trouve à ce moment, selon une procédure de mise à jour (LUP) dans une autre base de données d'abonné (VLR) et
- des liaisons de/vers un terminal de communication (MS) de l'abonné mobile sont établies par un dispositif de commutation (MSC) couplé à l'autre base de données d'abonné (VLR),
**caractérisé en ce que**
- un profil de numéros d'appel (R-CSI) qui contient des numéros d'appel universels (No1, No2) pour tous les abonnés mobiles enregistrés est de plus stocké dans la base de données d'abonné (HLR) du réseau de télécommunication mobile d'inscription (HPLMN), et **en ce que** lorsque l'abonné concerné pénètre dans le réseau de télécommunication mobile visité (VPLMN), lors de la procédure de mise à jour (LUP), ce profil est transmis dans l'autre base de données d'abonné (VLR) pour y être stocké et **en ce que**
- dans le réseau de télécommunication mobile visité (VPLMN), pour une liaison à partir du terminal de communication (MS), qui est initiée par un numéro d'appel (CldPA) composé par l'abonné mobile, le dispositif de commutation (MSC) compare les numéros d'appel du profil de numéros d'appel (R-CSI) au numéro d'appel (C1dPA) composé et en cas de correspondance établit une liaison avec un dispositif de gestion de services (SCP) qui convertit le numéro d'appel composé (C1dPA) transmis conjointement en un nouveau numéro d'appel (C1dPA^{*}) et le renvoie au dispositif de commutation (MSC) pour poursuivre l'établissement de la liaison.

2. Procédé selon la revendication 1, dans lequel le numéro d'appel composé (C1dPA) ayant un format de numéro d'appel interne au réseau est converti par le dispositif de gestion de services (SCP) en le nouveau numéro d'appel (C1dPA*) ayant un format international de numéro d'appel.

3. Procédé selon la revendication 1 ou 2, dans lequel, en plus des numéros d'appel universels (No1, No2) contenus dans le profil de numéros d'appel (R-CSI), un identificateur de service (SK) et/ou un identificateur (SCP-A) du dispositif de gestion de services (SCP) est stocké et transmis conjointement.

4. Procédé selon l'une des revendications précédentes, dans lequel des numéros d'appel abrégés sont stockés dans le profil de numéros d'appel (R-CSI) comme numéros d'appel universels (No1, No2).

5. Procédé selon la revendication 4, dans lequel, lorsque l'abonné mobile compose un numéro d'appel abrégé, il utilise un service défini.

6. Procédé selon la revendication 4 ou 5, dans lequel l'abonné mobile appelle sa boîte de messagerie en composant un numéro d'appel abrégé.

7. Procédé selon l'une des revendications précédentes, dans lequel les numéros d'appel universels (No1, No2) sont stockés dans le profil de numéros d'appel (R-CSI) avec le nombre complet de chiffres du numéro d'appel ou avec un nombre restreint de chiffres du numéro d'appel et sont respectivement comparés avec le nombre correspondant de chiffres du numéro d'appel composé (C1dPA) .

8. Procédé selon l'une des revendications précédentes, dans lequel :
- des données de service de l'abonné mobile sont stockées dans les bases de données d'abonné (HLR, VLR) comme données individuelles de l'abonné et
- le dispositif de commutation (MSC) examine d'abord les données de service et établit une liaison avec un dispositif de gestion de services, et examine les numéros d'appel (No1, No 2) du profil de numéros d'appel (R-CSI) par rapport au numéro d'appel composé (C1dPA) pour ensuite établir la liaison avec un dispositif de gestion de services (SCP).

9. Système de télécommunication mobile destiné à la commande de l'établissement d'une liaison, qui présente :
- au moins une base de données d'abonné (HLR) dans laquelle des données individuelles de chaque abonné mobile enregistré dans son réseau de télécommunication mobile d'inscription (HPLMN) sont stockées, et une autre base de données d'abonné (VLR) dans laquelle, lorsque l'abonné se déplace, les données individuelles de l'abonné sont stockées, en fonction de l'emplacement où il se trouve à ce moment, selon une procédure de mise à jour (LUP)
- un dispositif de commutation (MSC) couplé à l'autre base de données d'abonné (VLR), pour établir des liaisons avec le terminal de communication (MS) de l'abonné mobile,
**caractérisé en ce qu'**il présente :
- des moyens de stockage (MM) dans la base de données d'abonné (HLR) du réseau de télécommunication mobile d'inscription (HPLMN) pour stocker en supplément un profil de numéro d'abonné (R-CSI) qui contient des numéros d'appel universels (No1, No2) pour tous les abonnés mobiles enregistrés, des moyens de commande (CON) dans la base de données d'abonné (HLR) pour transmettre le profil de numéros d'appel (R-CSI) lors de la procédure de mise à jour (LUP) lorsque l'abonné concerné pénètre dans le réseau de télécommunication mobile visité (VPLMN), ainsi que des moyens de stockage (MM) dans l'autre base de données d'abonné (VLR), pour stocker le profil de numéros d'appel (R-CSI) transmis conjointement,
- des moyens de commande (CM) dans le dispositif de commutation (MSC) du réseau de télécommunication mobile visité (VPLMN), pour comparer les numéros d'appel du profil de numéros d'appel (R-CSI) à un numéro d'appel (C1dPA) composé par l'abonné mobile en vue d'une liaison à partir du terminal de communication (MS) initiée par le numéro d'appel (C1dPA) composé, et pour établir une liaison avec un dispositif de gestion de services (SCP) en cas de correspondance, et
- des moyens de commande (SL) dans le dispositif de gestion de services (SCP), pour convertir le numéro d'appel composé (C1dPA) transmis conjointement en un nouveau numéro d'appel (C1dPA*) et pour renvoyer le nouveau numéro d'appel (C1dPA*) au dispositif de commutation (MSC) pour poursuivre l'établissement de la liaison.
